# EUROPÄISCHE PATENTSCHRIFT

(11) **EP 1 627 402 B1**
(45) Veröffentlichungstag und Bekanntmachung des Hinweises auf die Patenterteilung: **11.10.2006**
(21) Anmeldenummer: 04729361.8
(22) Anmeldetag: 24.04.2004
(51) Int. Cl.: H01H 47/00, H02H 9/04

(54) **SICHERHEITSSCHALTGERÄT ZUM FEHLERSICHEREN ABSCHALTEN EINES ELEKTRISCHEN VERBRAUCHERS SOWIE ENTSPRECHENDES VERFAHREN**
SAFETY SWITCHING DEVICE FOR THE FAILSAFE SHUTDOWN OF AN ELECTRIC CONSUMER AND CORRESPONDING METHOD
APPAREIL DE COMMUTATION DE SECURITE POUR L'ARRET A SECURITE INTEGREE D'UNE CHARGE ELECTRIQUE ET PROCEDE CORRESPONDANT

(30) Priorität: 23.05.2003 DE 10325363
(43) Veröffentlichungstag der Anmeldung: 22.02.2006
(73) Patentinhaber: Pilz GmbH & Co. KG, 73760 Ostfildern (DE)
(72) Erfinder: HORNUNG, Guenter, 70771 Leinfelden-Echterdingen (DE)
(74) Vertreter: Duhme, Torsten
(86) Internationale Anmeldenummer: PCT/EP2004/004352
(87) Internationale Veröffentlichungsnummer: WO 2004/105067

(56) Entgegenhaltungen:
- DE-A- 10 045 651
- DE-A- 19 954 460

## Beschreibung

Die vorliegende Erfindung betrifft ein Sicherheitsschaltgerät zum fehlersicheren Abschalten eines elektrischen Verbrauchers, insbesondere einer elektrisch angetriebenen Maschine, mit
- einem Signalverarbeitungsteil zum Aufnehmen und Auswerten eines eingangsseitigen Schaltsignals,
- zumindest einem Schaltelement, insbesondere einem Halbleiter-Schaltelement, das gesteuert vom Signalverarbeitungsteil ein ausgangsseitiges Schaltsignal zum Abschalten des Verbrauchers bereitstellt, und
- einem Löschglied zum Abbauen von rückwirkenden Spannungsspitzen beim Abschalten des Verbrauchers.

Die Erfindung betrifft ferner ein Verfahren zum fehlersicheren Abschalten eines elektrischen Verbrauchers, insbesondere einer elektrisch angetriebenen Maschine, mit den Schritten:
- Aufnehmen und Auswerten eines eingangsseitigen Schaltsignals,
- Abschalten des Verbrauchers in Abhängigkeit von dem eingangsseitigen Schaltsignal, und
- Unterdrücken von Spannungsspitzen beim Abschalten des Verbrauchers mit Hilfe eines Löschgliedes.

Ein gattungsgemäßes Sicherheitsschaltgerät, in dem ein entsprechendes Verfahren implementiert ist, wird von der Anmelderin der vorliegenden Erfindung unter der Typenbezeichnung PNOZ® vertrieben.

Sicherheitsschaltgeräte im Sinne der vorliegenden Erfindung sind dazu vorgesehen, technische Anlagen und Geräte fehlersicher zu steuern und insbesondere fehlersicher abzuschalten, wenn dies erforderlich ist, um beispielsweise eine Gefährdung für Bedienpersonal zu vermeiden. "Fehlersicher" bedeutet dabei, dass der erfolgreiche Abschaltvorgang selbst dann sichergestellt sein muss, wenn in dem Sicherheitsschaltgerät oder dessen Umgebung ein Fehler auftritt, beispielsweise also ein Bauteil des Sicherheitsschaltgerätes ausfällt. Gattungsgemäße Sicherheitsschaltgeräte sind daher in aller Regel redundant aufgebaut, und sie benötigen in zahlreichen Ländern eine gesonderte Zulassung durch eine zuständige Aufsichtsbehörde. Im Hinblick auf die vorliegende Erfindung sind Sicherheitsschaltgeräte solche, die zumindest die Kategorie 3 der Europäischen Norm EN 954-1 oder eine vergleichbare Sicherheitsnorm erfüllen und darüber hinaus solche, die speziell für eine entsprechende sicherheitskritische Anwendung vorgesehen sind. Dabei ist die Erfindung allerdings nicht auf Sicherheitsschaltgeräte im engeren Sinne beschränkt, sondern sie umfasst gleichermaßen auch Sicherheitssteuerungen und Feldbus-basierte Sicherheitssysteme, die über ggf. komplexe Steuerungsaufgaben hinaus die Funktionalität eines Sicherheitsschaltgerätes der nachfolgend näher beschriebenen Art realisieren.

Der Signalverarbeitungsteil des Sicherheitsschaltgerätes dient zum Aufnehmen und Auswerten eines eingangsseitigen Schaltsignals, das bei üblichen Anwendungen bspw. von einem Not-Aus-Taster, einer Schutztür, einer Lichtschrankenanordnung, Zwei-Hand-Bedienschaltern oder anderen Sicherheitsgebern erzeugt wird. Der Signalverarbeitungsteil wertet das Schaltsignal in fehlersicherer Weise aus und steuert in Abhängigkeit davon zumindest ein, in aller Regel jedoch mehrere ausgangsseitige Schaltelemente. Das Ausgangssignal der Schaltelemente ist einem oder mehreren Aktoren zugeführt, wie bspw. Schützen, über deren Arbeitskontakte die Stromzufuhr einer überwachten Maschine geführt ist. Des Weiteren werden mit Hilfe gattungsgemäßer Sicherheitsschaltgeräte häufig auch Magnetventile ein- oder ausgeschaltet, die Bestandteil eines hydraulischen Antriebs sind.

Schützen, Magnetventilen und vergleichbaren Aktoren ist gemeinsam, dass sie für das Sicherheitsschaltgerät eine induktive Last darstellen. Dies hat zur Folge, dass beim Abschalten eine Überspannungsspitze auftritt, deren Höhe die normale Arbeitsspannung deutlich übersteigen kann. Die Ausgänge gattungsgemäßer Sicherheitsschaltgeräte weisen daher in aller Regel ein Löschglied auf, häufig eine sog. Löschdiode, die antiparallel zu der Eingangsspule des Schützes oder Magnetventils geschaltet ist. Ein Sicherheitsschaltgerät mit einer solchen Löschdiode ist bspw. aus der DE 199 54 460 A1 bekannt

Die Löschglieder bei den bekannten Sicherheitsschaltgeräten besitzen jedoch zwei grundsätzliche Nachteile, die je nach praktischer Realisierung unterschiedlich stark ausgeprägt sein können. Ein erster Nachteil besteht darin, dass beim Abschalten der Strom durch die Schützspule langsamer abklingt, was den Abschaltvorgang verzögert. Ein zweiter Nachteil ist ein unerwünschter Wärmeeintrag in das Sicherheitsschaltgerät, der insbesondere dadurch entsteht, dass der Signalverarbeitungsteil die ausgangsseitigen Schaltelemente zu Testzwecken häufig aus- und wieder einschalten muss. Die beim Ausschalten auftretende Spannungsspitze wird über das im Sicherheitsschaltgerät angeordnete Löschglied abgebaut, wobei die in der Schützspule gespeicherte Energie innerhalb des Sicherheitsschaltgerätes in Ohmsche Verlustleistung umgewandelt wird.

Vor diesem Hintergrund ist es eine Aufgabe der vorliegenden Erfindung, ein Sicherheitsschaltgerät der eingangs genannten Art anzugeben, bei dem der Wärmeeintrag in das Sicherheitsschaltgerät vermindert ist.

Diese Aufgabe wird bei einem Sicherheitsschaltgerät der eingangs genannten Art dadurch gelöst, dass das Löschglied zumindest eine erste und eine zweite Löschbetriebsart aufweist, die alternativ zueinander aktivierbar sind.

Die Aufgabe wird ferner durch ein Verfahren der eingangs genannten Art gelöst, bei dem das Löschglied zumindest eine erste und eine zweite Löschbetriebsart aufweist, die alternativ zueinander aktiviert werden, wobei bevorzugt das Löschglied zum Abschalten des Verbrauchers von der ersten in die zweite Löschbetriebsart umgeschaltet wird.

Die Erfindung basiert damit auf der Idee, das Löschglied bei einem Sicherheitsschaltgerät variabel auszubilden. Dies macht es möglich, das Löschglied für verschiedene Situationen und Anforderungen unterschiedlich zu gestalten und jeweils auf den gewünschten Einsatzzweck hin zu optimieren. Das Löschglied erhält damit verschiedene Löschbetriebsarten, die je nach Einsatzzweck und Situation aktivierbar sind.

Für eine Sicherheitsabschaltung ist das Löschglied bevorzugt so ausgelegt, dass ein möglichst schnelles Abklingen des Stroms in der induktiven Last erreicht wird. Der Wärmeeintrag in das Sicherheitsschaltgerät ist in dieser Situation von untergeordneter Bedeutung, da es hierbei in erster Linie auf das schnelle und sichere Abschalten des Verbrauchers ankommt.

Da bei gattungsgemäßen Sicherheitsschaltgeräten eine Sicherheitsabschaltung vergleichsweise selten auftritt, stellt der Wärmeeintrag in dieser Situation ein vergleichsweise geringes Problem dar. Anders verhält es sich allerdings mit den regelmäßig durchgeführten Abschalttests. Da diese im Betrieb des Sicherheitsschaltgeräts regelmäßig auftreten und zudem kein übergeordneter Sicherheitszweck entgegensteht, ist es von Vorteil, das Löschglied in diesem Fall nicht vorrangig auf optimale Geschwindigkeit hin, sondern auf möglichst geringen Wärmeeintrag hin zu optimieren.

Die Unterschiedlichen Ziele können gemeinsam dadurch erreicht werden, dass das Löschglied für unterschiedliche Löschbetriebsarten ausgelegt ist. Darüber hinaus kann ein Löschglied mit unterschiedlichen Löschbetriebsarten auch einfacher auf individuelle Eigenschaften von verschiedenen (induktiven) Lasten hin optimiert werden.

Die genannte Aufgabe ist damit vollständig gelöst.

In einer Ausgestaltung der Erfindung ist die Löschbetriebsart von dem Signalverarbeitungsteil einstellbar.

Diese Ausgestaltung besitzt den Vorteil, dass der Signalverarbeitungsteil die volle Kontrolle über die Funktion des Löschgliedes besitzt, so dass bei einer vom Signalverarbeitungsteil ausgelösten Sicherheitsabschaltung eine optimal kurze Abklingzeit gewährleistet ist.

In einer weiteren Ausgestaltung besitzt der Signalverarbeitungsteil einen ersten Betriebszustand, bei dem der Verbraucher eingeschaltet ist, sowie einen zweiten Betriebszustand, mit dem der Verbraucher abgeschaltet wird. Bevorzugt befindet sich das Löschglied beim ersten Betriebszustand in der ersten Löschbetriebsart und beim zweiten Betriebszustand in der zweiten Löschbetriebsart.

Diese Ausgestaltung macht von der zugrunde liegenden Idee optimalen Gebrauch, indem sie die Löschbetriebsart insbesondere bei einer Sicherheitsabschaltung wechselt. Während die Sicherheitsabschaltung nämlich vor allem dann dazu dient, den angeschlossenen Verbraucher in einen gefahrlosen Zustand zu überführen, bleibt der angeschlossene Verbraucher im stationären Betrieb von den internen Funktionsabläufen des Sicherheitsschaltgerätes häufig weitgehend unberührt. Selbst wenn zu Testzwecken das zumindest eine ausgangsseitige Schaltelement kurzzeitig geöffnet wird, bleibt der angeschlossene Verbraucher auf Grund der Trägheit der Aktoren häufig unbeeinflusst. Der Wechsel der Löschbetriebsarten beim Abschalten des Verbrauchers ermöglicht eine optimale Anpassung an die unterschiedlichen Interessenlagen im stationären Überwachungsbetrieb und bei einer Sicherheitsabschaltung.

In einer weiteren Ausgestaltung ist der Signalverarbeitungsteil dazu ausgebildet, in seinem ersten Betriebszustand das zumindest eine Schaltelement impulsweise auszuschalten.

Diese Ausgestaltung knüpft an das vorher Gesagte an, da ein Wechsel der Löschbetriebsart besonders vorteilhaft ist, wenn zwischen Abschaltvorgängen zu Testzwecken und "echten" Sicherheitsabschaltungen unterschieden wird. Auf Grund der unterschiedlichen Interessenlagen ist der Wechsel der Löschbetriebsart hier besonders wirkungsvoll.

In einer weiteren Ausgestaltung besitzt das Löschglied in der ersten Löschbetriebsart eine niedrige Ansprechschwelle und in der zweiten Löschbetriebsart eine hohe Ansprechschwelle.

In dieser Ausgestaltung ist das Löschglied besonders darauf hin optimiert, den Wärmeeintrag in das Sicherheitsschaltgerät während der Abschalttests zu minimieren, und andererseits bei einer Sicherheitsabschaltung ein möglichst schnelles Abklingen des Stroms durch die induktive Last zu ermöglichen.

In einer weiteren Ausgestaltung ist parallel zu dem Schaltelement ein Überspannungs-Schutzelement angeordnet.

Diese Ausgestaltung bietet in Ergänzung zu den verschiedenen Löschbetriebsarten einen verbesserten Schutz des ausgangsseitigen Schaltelements und ermöglicht eine schnellere Sicherheitsabschaltung. So kann das Löschglied in der zweiten Löschbetriebsart auf die Sicherheitsabschaltung hin optimiert werden, ohne Rücksicht auf den Schutz des ausgangsseitigen Schaltelements zu nehmen.

In einer weiteren Ausgestaltung besitzt das Überspannungs-schutzelement eine dritte Ansprechschwelle, die höher ist als die niedrige Ansprechschwelle des Löschgliedes.

Diese Maßnahme knüpft an den zuvor genannten Gedanken an. Sie besitzt darüber hinaus den besonderen Vorteil, dass die in der induktiven Last gespeicherte Energie während der Abschalttests "draußen" gehalten wird, d.h. nicht über das Überspannungs-schutzelement in Ohmsche Verlustwärme umgesetzt wird. Ein weiterer Vorteil dieser Maßnahme ist, dass die induktive Last nach Beendigung des Abschalttests nicht oder nur zu einem geringen Teil neu aufgeladen werden muss, was die Durchführung der Abschalttests erleichtert.

In einer weiteren Ausgestaltung beinhaltet das Löschglied ein schaltbares Halbleiterbauelement, vorzugsweise einen Thyristor, als Löschelement.

Schaltbare Halbleiterbauelemente und insbesondere Thyristoren haben sich auf Grund ihrer geringen Durchlassspannung im durchgeschalteten Zustand als besonders wirkungsvoll erwiesen, um den Wärmeeintrag in das Schaltgerät bei der Durchführung von Abschalttests zu minimieren.

In einer weiteren Ausgestaltung ist das schaltbare Halbleiterbauelement in dem Sicherheitsschaltgerät integriert.

Diese Ausgestaltung erleichtert die Installation des neuen Sicherheitsschaltgerätes, da das Löschglied nicht zusätzlich zu dem Sicherheitsschaltgerät von Anwenderseite her zu verdrahten ist. Andererseits ist die Integration des Löschgliedes in das Sicherheitsschaltgerät hier möglich, ohne die thermische Belastung des Sicherheitsschaltgerätes überproportional zu erhöhen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein schematisches Blockschaltbild eines Ausführungsbeispiels des neuen Sicherheitsschaltgerätes,
- Fig. 2: ein bevorzugtes Ausführungsbeispiel eines Löschgliedes bei dem neuen Sicherheitsschaltgerät aus Fig. 1,
- Fig. 3: eine vereinfachte Darstellung des Signalverlaufs am Ausgang des neuen Sicherheitsschaltgerätes aus Fig. 1 ohne Berücksichtigung von Ausschalt-Spannungsspitzen, und
- Fig. 4: eine vereinfachte Darstellung des Betragssignalverlaufs beim Abschalten einer induktiven Last.

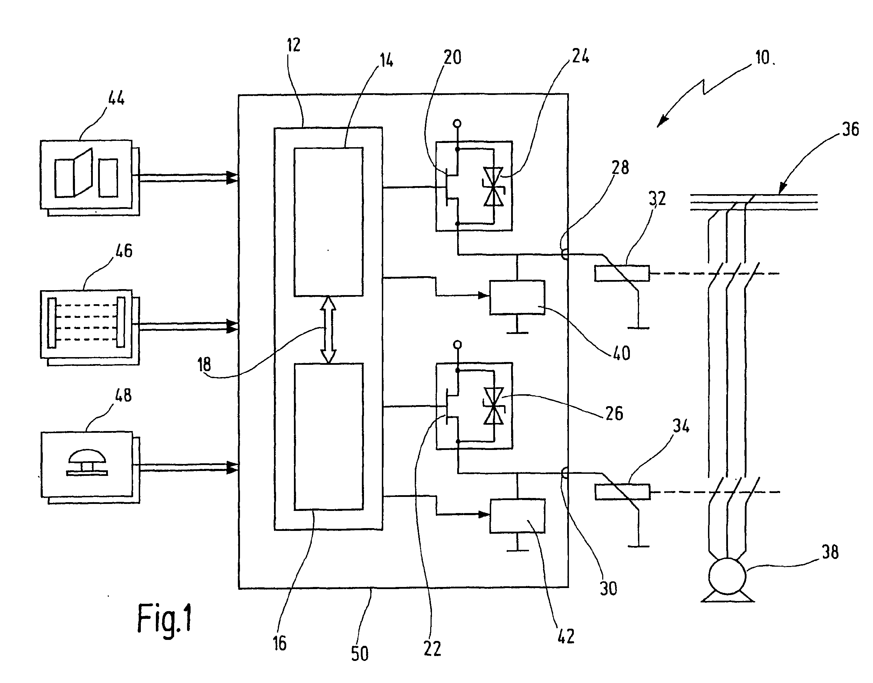

In Fig. 1 ist ein Ausführungsbeispiel eines neuen Sicherheitsschaltgerätes in seiner Gesamtheit mit der Bezugsziffer 10 bezeichnet.

Das Sicherheitsschaltgerät 10 besitzt einen Signalverarbeitungsteil 12, der hier vereinfacht mit zwei redundanten Mikrocontrollern 14, 16 dargestellt ist. Die beiden redundanten Mikrocontroller 14, 16 überwachen sich gegenseitig, was durch einen Pfeil 18 angedeutet ist. Es versteht sich, dass jeder der beiden Mikrocontroller 14, 16 über eine geeignete Peripherie (Speicher, Kommunikationsinterfaces etc.) verfügt, die hier der Einfachheit halber nicht dargestellt ist. Darüber hinaus können auch mehr als nur zwei redundante Kanäle für die Signalverarbeitung vorhanden sein.

Das Sicherheitsschaltgerät 10 besitzt zwei redundante ausgangsseitige Schaltelemente 20, 22, die hier gemäß einer bevorzugten Ausführung als elektronische Schaltelemente (Halbleiterbauelemente, hier als MOS-Transistoren) dargestellt sind. Bei derartigen Schaltelementen kommen die Vorteile der vorliegenden Erfindung besonders wirkungsvoll zum Tragen, wenngleich die Erfindung hierauf nicht beschränkt ist. Jedem Schaltelement 20, 22 ist ein Schutzelement 24, 26 parallel geschaltet. Die Schutzelemente 24, 26 überbrücken hier die Source-Drain-Strecke der beiden Schaltelemente 20, 22 und sie sind hier gemäß einem bevorzugten Ausführungsbeispiel jeweils in Form von zwei gegenläufigen Zener-Dioden realisiert.

Die Ausgangssignale der beiden Schaltelemente 20, 22 sind über Ausgänge 28, 30 zwei extern angeschlossenen Aktoren 32, 34 zugeführt. Die Aktoren 32, 34 sind hier als Schütze dargestellt, deren jeweilige Arbeitskontakte in Reihe zueinander angeordnet sind. Über die Arbeitskontakte der Schütze 32, 34 ist eine dreiphasige Stromversorgung 36 mit einem hier beispielhaft angenommenen Antrieb 38 verbunden. Der Antrieb 38 kann beispielsweise ein Stellantrieb für einen automatisiert arbeitenden Roboter oder ein Förderband sein. In weiteren Ausführungsbeispielen sind die Aktoren 32, 34 Magnetventile, mit denen beispielsweise die Arbeitsbewegung einer hydraulischen Presse gesteuert wird.

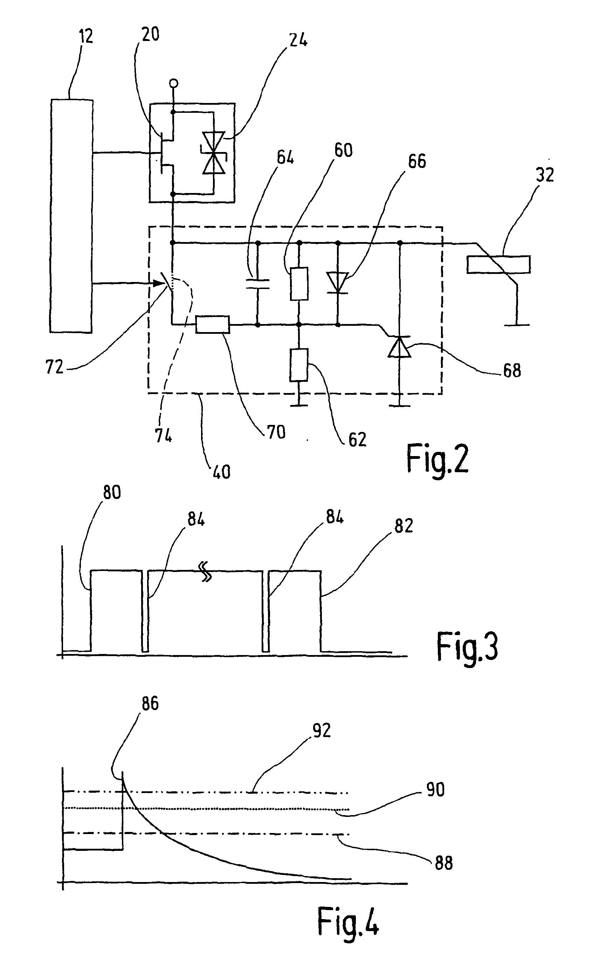

Das Sicherheitsschaltgerät 10 besitzt des Weiteren zwei Löschglieder 40, 42, von denen jeweils eins parallel zu dem entsprechenden Ausgang 28, 30 an das Schaltelement 20, 22 angeschlossen ist. Eine bevorzugte Realisierung für die Löschglieder 40, 42 ist nachfolgend an Hand Fig. 2 näher erläutert. Wie in Fig. 1 dargestellt ist, werden die Löschglieder 40, 42 hier von dem Signalverarbeitungsteil 12 angesteuert und in ihren Löschbetriebsarten umgeschaltet (wird nachfolgend näher erläutert).

Eingangsseitig nimmt das Sicherheitsschaltgerät 10 die Signale von einem oder mehreren Sicherheitsgebern auf, die hier beispielhaft als Schutztürsensor 44, als Lichtschrankenanordnung 46 und als Not-Aus-Taster 48 dargestellt sind. Diese gemeinsame Darstellung der Sicherheitsgeber ist beispielhaft, da in der Praxis Sicherheitsschaltgeräte häufig speziell für einen Typ von Sicherheitsgeber ausgelegt sind. Es gibt jedoch auch Sicherheitsschaltgeräte, an die verschiedene Arten von Sicherheitsgebern anschließbar sind, wie hier dargestellt. Darüber hinaus versteht es sich, dass die Erfindung nicht auf Sicherheitsschaltgeräte zur Auswertung der hier gezeigten Sicherheitsgeber beschränkt ist, sondern auch Sicherheitsschaltgeräte für andere Arten von Signalgebern beinhaltet. Insbesondere kann als Signalgeber auch ein vorhergehendes Sicherheitsschaltgerät fungieren, wie dies beispielsweise in der WO 01/67610 A1 beschrieben ist.

Die Erfindung ist hier am Beispiel eines Sicherheitsschaltgerätes 10 dargestellt, bei dem der Signalverarbeitungsteil 12 und die Schaltelemente 20, 22 sowie die Löschglieder 40, 42 in einem gemeinsamen Gerätegehäuse 50 angeordnet sind. Das Sicherheitsschaltgerät 10 kann damit als kompaktes Bauteil in einer Gesamtanlage integriert werden, beispielsweise durch Montage und Verdrahtung in einem Schaltschrank. Wie bereits eingangs erwähnt, ist die Erfindung jedoch hierauf nicht beschränkt. Abweichend hiervon kann die Erfindung gleichermaßen auch bei einer komplexen Sicherheitssteuerung Anwendung finden, wie sie beispielsweise von der Anmelderin unter der Typenbezeichnung PSS® angeboten wird, oder bei einem Feldbus-basierten System mit verteilten Schaltelementen.

Bei der nachfolgenden Beschreibung eines bevorzugten Ausführungsbeispiels für das Löschglied 40 bezeichnen gleiche Bezugszeichen dieselben Elemente wie zuvor.

In Fig. 2 ist das Löschglied 40 in einem bevorzugten schaltungstechnischen Aufbau dargestellt. Es beinhaltet einen Spannungsteiler bestehend aus zwei Widerständen 60, 62, wobei das freie Ende des Widerstandes 60 mit dem Ausgang des Schaltelements 20 verbunden ist, und wobei das freie Ende des Widerstands 62 auf Masse liegt. Parallel zum Widerstand 60 befinden sich eine Kapazität 64 und eine in Durchlassrichtung angeordnete Schutzdiode 66. Des Weiteren ist parallel zu dem Spannungsteiler 60, 62 ein Thyristor 68 angeordnet, wobei dessen Steueranschluss mit dem Verbindungspunkt der beiden Widerstände 60, 62 verbunden ist. Der Thyristor 68 erhält damit eine Steuerspannung, die durch das Teilerverhältnis des Spannungsteilers 60, 62 bestimmt wird.

Des Weiteren besitzt das Löschglied 40 eine Serienschaltung bestehend aus einem Widerstand 70 und einem Schalter, der hier in einer ersten Schaltstellung 72 (geöffnet) dargestellt ist. Die zweite (geschlossene) Schaltstellung ist bei der Bezugsziffer 74 angedeutet. Die Serienschaltung aus Widerstand 70 und Schalter 72/74 liegt parallel zum Widerstand 60. Dies bedeutet, dass sich mit Hilfe des Schalters 72/74 das Teilerverhältnis des Spannungsteilers 60, 62 und damit die am Zündanschluss des Thyristors 68 anliegende Zündspannung variieren lassen.

In Fig. 3 ist das Ausgangssignal des Sicherheitsschaltgerätes 10 an den Ausgängen 28, 30 vereinfacht dargestellt. Mit einer Flanke 80 wird die Spannung an den Ausgängen 28, 30 des Sicherheitsschaltgerätes 10 eingeschaltet. Die Schütze 32, 34 werden dadurch bestromt und schließen ihre Arbeitskontakte. Infolgedessen ist der Antrieb 38 mit der Stromversorgung 36 verbunden und läuft an.

Während der Antrieb 38 läuft (Arbeitsbetrieb), überwacht das Sicherheitsschaltgerät 10 die am Eingang anliegenden Sensorsignale der Sicherheitsgeber 44, 46, 48. Der Signalverarbeitungsteil 12 wertet die eingangsseitigen Schaltsignale der Sicherheitsgeber fehlersicher aus und löst ggf. eine Sicherheitsabschaltung des Antriebs 38 aus, was mit einer Flanke 82 in Fig. 3 dargestellt ist. Zur Sicherheitsabschaltung öffnet der Signalverarbeitungsteil 12 die Schaltelemente 20, 22, so dass die Spannung an den Ausgängen 28, 30 abfällt und infolgedessen die Arbeitskontakte der Schütze 32, 34 geöffnet werden. Hierdurch wird der Antrieb 38 von der Stromversorgung 36 getrennt.

Während des Arbeitsbetriebs, der nachfolgend auch als erster Betriebszustand bezeichnet ist, führt der Signalverarbeitungsteil 12 regelmäßige Abschalttests durch, indem er die Schaltelemente 20, 22 kurzzeitig (impulsweise) öffnet und wieder schließt. Zwei derartige Abschalttests sind in dem Ausgangssignal in Fig. 3 bei der Bezugsziffer 84 dargestellt.

Die Abschaltimpulse 84 sind üblicherweise kürzer als die Abfallzeit der Schütze 32, 34, so dass der Antrieb 38 trotz der Abschaltimpulse 84 ungehindert weiterläuft. Gegebenenfalls können die Abschaltimpulse 84 für einen ungestörten Betrieb des Antriebs 38 auch vor den Schützen 32, 34 ausgefiltert sein. Über eine hier nicht dargestellte Rückleseleitung kann der Signalverarbeitungsteil 12 das erfolgreiche Öffnen der Schaltelemente 20, 22 überprüfen. Der Signalverarbeitungsteil 12 kann damit sicherstellen, dass die Schaltelemente 20, 22 für den Fall einer Sicherheitsabschaltung zuverlässig funktionieren.

Wie den einschlägigen Fachleuten auf diesem Gebiet bekannt ist, hat das (auch kurzzeitige) Abschalten einer induktiven Last eine Spannungsspitze zur Folge, die in Fig. 4 im Betragsverlauf vereinfacht dargestellt ist (Bezugsziffer 86). Die Rückwirkung derartiger Spannungsspitzen 86 auf die Ausgänge des Sicherheitsschaltgerätes 10 werden durch die Löschglieder 40, 42 abgefangen.

Die Funktionsweise der Löschglieder 40, 42 ist nun wie folgt: Im Arbeitsbetrieb baut sich bei einem Abschaltimpuls 84 die Spannungsspitze 86 auf. Diese erzeugt über den Spannungsteiler 60, 62 eine Zündspannung am Zündanschluss des Thyristors 68. Die Dimensionierung des Spannungsteilers 60, 62 ist so gewählt, dass die Ansprechschwelle des Thyristors 68 niedriger ist als die Ansprechschwelle der Schutzelemente 24, 26. In Fig. 4 sind die beiden genannten Ansprechschwellen mit den Bezugsziffern 88 und 90 bezeichnet. Beim Überschreiten der Ansprechschwelle 88 zündet der Thyristor 68 und schließt damit einen Entladestromkreis über den Schütz 32. Da der Thyristor eine niedrige Durchlassspannung von etwa 1,4 Volt besitzt, wird dabei nur verhältnismäßig wenig Wärme in das Sicherheitsschaltgerät 10 eingebracht.

Sobald das Schaltelement 20, 22 am Ende des Abschalttests wieder geschlossen wird oder wenn der Löschstrom durch den Schütz 32 weit genug abgeklungen ist, geht der Thyristor 68 wieder in seinen Sperrzustand über. Die Ansprechschwelle 88 des Thyristors 68 wird dabei im Wesentlichen durch das Teilerverhältnis des Spannungsteilers 60, 62 bestimmt.

Wenn nun der Signalverarbeitungsteil 12 eine Sicherheitsabschaltung auslösen möchte, bringt er das Löschglied 40, 42 durch Betätigen des Schalters 72/74 in seine zweite Löschbetriebsart. Auf Grund des veränderten Teilerverhältnisses des Spannungsteilers zündet der Thyristor 68 nun erst bei einer höheren Ansprechschwelle, die in Fig. 4 bei der Bezugsziffer 92 angedeutet ist. Die Ansprechschwelle 92 ist in Fig. 4 höher als die Ansprechschwelle 90 des Schutzelements 24, 26 dargestellt, d.h. in diesem Fall spricht das Schutzelement 24, 26 bereits vor dem Thyristor 68 an. Die Ansprechschwellen 90, 92 können jedoch auch in etwa gleich oder in umgekehrter Reihenfolge als in Fig. 4 gezeigt gewählt werden. Durch die freie Dimensionierung der Ansprechschwelle 92 für eine Sicherheitsabschaltung kann das Entmagnetisierverhalten der Schütze 32, 34 unabhängig von thermischen Betrachtungen im Arbeitsbetrieb auf optimale Geschwindigkeit eingestellt werden. Gegebenenfalls kann eine Löschung der Spannungsspitze 86 vollständig unterbunden werden, indem der Widerstand 70 durch einen Kurzschluss (R = 0 Ohm) ersetzt wird.

Der Vollständigkeit halber sei erwähnt, dass die Kapazität 64 zur Glättung der Spannung zwischen dem Zündanschluss und der Kathode des Thyristors dient, während die Schutzdiode 66 den Thyristor 68 gegen unzulässig hohe Inversspannungen schützt.

Mit der gezeigten Anordnung für das Löschglied 40, 42 konnte der Wärmeeintrag aufgrund von Abschalttests bei Sicherheitsschaltgeräten der Anmelderin von etwa 12 Watt auf ca. 1 Watt reduziert werden. Dies ermöglicht eine kompaktere Bauweise der Sicherheitsschaltgeräte und reduziert zudem die Gefahr von thermisch bedingten Ausfällen, d.h. die Fehlersicherheit der Sicherheitsschaltgeräte mit den neuen Löschgliedern 40, 42 wurde erhöht.

## Patentansprüche

1. Sicherheitsschaltgerät zum fehlersicheren Abschalten eines elektrischen Verbrauchers (38), insbesondere einer elektrisch angetriebenen Maschine, mit
- einem Signalverarbeitungsteil (12) zum Aufnehmen und Auswerten eines eingangsseitigen Schaltsignals,
- zumindest einem Schaltelement (20, 22), insbesondere einem Halbleiterschaltelement, das gesteuert vom Signalverarbeitungsteil (12) ein ausgangsseitiges Schaltsignal (82) zum Abschalten des Verbrauchers (38) bereitstellt, und
- einem Löschglied (40, 42) zum Abbauen von Spannungsspitzen (86) beim Abschalten des Verbrauchers (38),
**dadurch gekennzeichnet, dass** das Löschglied (40, 42) zumindest eine erste und eine zweite Löschbetriebsart (72, 74) aufweist, die alternativ zueinander aktivierbar sind.

2. Sicherheitsschaltgerät nach Anspruch 1, **dadurch gekennzeichnet, dass** die Löschbetriebsart (72, 74) von dem Signalverarbeitungsteil (12) einstellbar ist.

3. Sicherheitsschaltgerät nach Anspruch 1 oder 2, **dadurch gekennzeichnet, dass** der Signalverarbeitungsteil (12) einen ersten Betriebszustand besitzt, während dessen der Verbraucher (38) eingeschaltet ist, sowie einen zweiten Betriebszustand, mit dem der Verbraucher (38) abgeschaltet wird.

4. Sicherheitsschaltgerät nach Anspruch 3, **dadurch gekennzeichnet, dass** sich das Löschglied (40, 42) beim ersten Betriebszustand in der ersten Löschbetriebsart (72) und beim zweiten Betriebszustand in der zweiten Löschbetriebsart (74) befindet.

5. Sicherheitsschaltgerät nach Anspruch 3 oder 4, **dadurch gekennzeichnet, dass** der Signalverarbeitungsteil (12) dazu ausgebildet ist, in seinem ersten Betriebszustand das zumindest eine Schaltelement (20, 22) impulsweise auszuschalten.

6. Sicherheitsschaltgerät nach einem der Ansprüche 1 bis 5, **dadurch gekennzeichnet, dass** das Löschglied (40, 42) in der ersten Löschbetriebsart (72) eine niedrige Ansprechschwelle (88) und in der zweiten Löschbetriebsart (74) eine hohe Ansprechschwelle (92) besitzt.

7. Sicherheitsschaltgerät nach einem der Ansprüche 1 bis 6, **dadurch gekennzeichnet, dass** parallel zu dem Schaltelement (20, 22) ein Überspannungs-Schutzelement (24, 26) angeordnet ist.

8. Sicherheitsschaltgerät nach Anspruch 7, **dadurch gekennzeichnet, dass** das Überspannungs-Schutzelement (24, 26) eine dritte Ansprechschwelle (90) besitzt, die höher ist als die niedrige Ansprechschwelle (88) des Löschgliedes (40, 42).

9. Sicherheitsschaltgerät nach einem der Ansprüche 1 bis 8, **dadurch gekennzeichnet, dass** das Löschglied (40, 42) ein schaltbares Halbleiterbauelement, vorzugsweise einen Thyristor (68), als Löschelement beinhaltet.

10. Sicherheitsschaltgerät nach Anspruch 9, **dadurch gekennzeichnet, dass** das schaltbare Halbleiterbauelement (68) in dem Sicherheitsschaltgerät (10) integriert ist.

11. Verfahren zum fehlersicheren Abschalten eines elektrischen Verbrauchers (38), insbesondere einer elektrisch angetriebenen Maschine, mit den Schritten:
- Aufnehmen und Auswerten eines eingangsseitigen Schaltsignals,
- Abschalten des Verbrauchers (38) in Abhängigkeit von dem eingangsseitigen Schaltsignal, und
- Abbauen von Spannungsspitzen (86) beim Abschalten des Verbrauchers (38) mit Hilfe eines Löschgliedes (40, 42),
**dadurch gekennzeichnet, dass** das Löschglied (40, 42) zumindest eine erste und eine zweite Löschbetriebsart (72, 74) aufweist, die alternativ zueinander aktiviert werden, wobei das Löschglied (40, 42) beim Abschalten des Verbrauchers bevorzugt von der ersten in die zweite Löschbetriebsart (72, 74) umgeschaltet wird.

## Claims

1. A safety switching device for the failsafe shutdown of an electric load (38), in particular of an electrically driven machine, having
- a signal processing part (12) for receiving and evaluating an input-side switching signal,
- at least one switching element (20, 22), in particular a semiconductor switching element, which provides, controlled by the signal processing part (12), an output-side switching signal (82) for shutting down the load (38), and
- an anti-surge element (40, 42) for canceling voltage spikes (86) when the load (38) is shut down,
**characterized in that** the anti-surge element (40, 42) has at least a first and a second anti-surge operating mode (72, 74), which can be activated as an alternative to one another.

2. The safety switching device of claim 1, **characterized in that** the anti-surge operating mode (72, 74) can be set by the signal processing part (12).

3. The safety switching device of claim 1 or 2, **characterized in that** the signal processing part (12) has a first operating state, during which the load (38) is switched on, and a second operating state for shutting down the load (38).

4. The safety switching device of claim 3, **characterized in that** the anti-surge element (40, 42) is in the first anti-surge operating mode (72) during the first operating state, and it is in the second anti-surge operating mode (74) during the second operating state.

5. The safety switching device of claim 3 or 4, **characterized in that** the signal processing part (12) is designed, in its first operating state, to switch off the at least one switching element (20, 22) in a pulsed manner.

6. The safety switching device of any of claims 1 to 5, **characterized in that** the anti-surge element (40, 42) has a low response threshold (88) in the first anti-surge operating mode (72) and a high response threshold (92) in the second anti-surge operating mode (74).

7. The safety switching device of any of claims 1 to 6, **characterized in that** an overvoltage protection element (24, 26) is arranged in parallel with the switching element (20, 22).

8. The safety switching device of claim 7, **characterized in that** the overvoltage protection element (24, 26) has a third response threshold (90), which is higher than the low response threshold (88) of the anti-surge element (40, 42).

9. The safety switching device of any of claims 1 to 8, **characterized in that** the anti-surge element (40, 42) comprises a switchable semiconductor component, preferably a thyristor (68), as anti-surge component.

10. The safety switching device of claim 9, **characterized in that** the switchable semiconductor component (68) is integrated in the safety switching device (10).

11. A method for the failsafe shutdown of an electric load (38), in particular of an electrically driven machine, comprising the steps of:
- receiving and evaluating an input-side switching signal,
- shutting down the load (38) as a function of the input-side switching signal, and
- canceling voltage spikes (86) by means of an anti-surge element (40, 42) when the load (38) is shut down,
**characterized in that** the anti-surge element (40, 42) has at least a first and a second anti-surge operating mode (72, 74), which are activated as an alternative to one another, the anti-surge element (40, 42) preferably being switched over from the first to the second anti-surge operating mode (72, 74) when the load is shut down.

## Revendications

1. Appareil de commutation de sécurité pour l'arrêt à sécurité intégrée d'une charge électrique (38), en particulier d'une machine entraînée électriquement, avec
- une partie (12) de traitement de signal pour recevoir et exploiter un signal de commutation côté entrée,
- au moins un élément de commutation (20, 22), en particulier un élément de commutation semi-conducteur qui, commandé par la partie (12) de traitement de signal, délivre un signal de commutation (82) côté sortie pour arrêter la charge (38), et
- un organe d'effacement (40, 42) pour éliminer des pics de tension (86) lors de l'arrêt de la charge (38),
**caractérisé en ce que** l'organe d'effacement (40, 42) présente au moins un premier et un deuxième modes d'effacement (72, 74) qui sont activables de manière alternative l'un par rapport à l'autre.

2. Appareil de commutation de sécurité selon la revendication 1, **caractérisé en ce que** le mode d'effacement (72, 74) peut être réglé par la partie (12) de traitement de signal.

3. Appareil de commutation de sécurité selon la revendication 1 ou 2, **caractérisé en ce que** la partie (12) de traitement de signal possède un premier état de service pendant que la charge (38) est en marche, ainsi qu'un deuxième état de service avec lequel la charge (38) est mise à l'arrêt.

4. Appareil de commutation de sécurité selon la revendication 3, **caractérisé en ce que** l'organe d'effacement (40, 42) se trouve dans le premier mode d'effacement (72) pour le premier état de service et dans le deuxième mode d'effacement (74) pour le deuxième état de service.

5. Appareil de commutation de sécurité selon la revendication 3 ou 4, **caractérisé en ce que** la partie (12) de traitement de signal est conformée pour, dans son premier état de service, arrêter par impulsion l'élément de commutation (20, 22) au nombre d'au moins un.

6. Appareil de commutation de sécurité selon l'une des revendications 1 à 5, **caractérisé en ce que** l'organe d'effacement (40, 42) possède dans le premier mode d'effacement (72) un seuil de réaction (88) bas et dans le deuxième mode d'effacement (74) un seuil de réaction (92) haut.

7. Appareil de commutation de sécurité selon l'une des revendications 1 à 6, **caractérisé en ce qu'**un élément (24, 26) de protection contre les surtensions est placé en parallèle avec l'élément de commutation (20, 22).

8. Appareil de commutation de sécurité selon la revendication 7, **caractérisé en ce que** l'élément (24, 26) de protection contre les surtensions possède un troisième seuil de réaction (90) qui est supérieur au seuil de réaction bas (88) de l'organe d'effacement (40, 42).

9. Appareil de commutation de sécurité selon l'une des revendications 1 à 8, **caractérisé en ce que** l'organe d'effacement (40, 42) contient comme élément d'effacement un composant semi-conducteur commutable, de préférence un thyristor (68).

10. Appareil de commutation de sécurité selon la revendication 9, **caractérisé en ce que** le composant semi-conducteur commutable (68) est intégré à l'appareil de commutation de sécurité.

11. Procédé d'arrêt à sécurité intégrée d'une charge électrique (38), en particulier d'une machine entraînée électriquement, comprenant les étapes consistant à :
- recevoir et exploiter un signal de commutation côté entrée ;
- arrêter la charge (38) en fonction du signal de commutation côté entrée, et
- éliminer des pics de tension (86) lors de l'arrêt de la charge (38) à l'aide d'un organe d'effacement (40, 42),
**caractérisé en ce que** l'organe d'effacement (40, 42) présente au moins un premier et un deuxième modes d'effacement (72, 74) qui sont activés de manière alternative l'un par rapport à l'autre, l'organe d'effacement (40, 42) étant basculé de préférence du premier au deuxième mode d'effacement (72, 74) lors de la mise à l'arrêt de la charge.
